# EUROPEAN PATENT APPLICATION

(11) **EP 4 760 249 A1**
(43) Date of publication of application: **17.06.2026**
(21) Application number: 24891882.3
(22) Date of filing: 15.11.2024
(51) Int. Cl.: G01N 27/20, B23K 26/21, B23K 26/03, B23K 31/12, H01M 10/42, H01M 50/536

(54) **BATTERY SIMULATION DEVICE AND OPERATING METHOD THEREFOR**

(30) Priority: 16.11.2023 KR 20230159124; 14.11.2024 KR 20240162044
(71) Applicant: LG Energy Solution, Ltd., Seoul 07335 (KR); UIF (University Industry Foundation), Yonsei University, Seoul 03722 (KR)
(72) Inventor: PARK, Tae Hoon, Daejeon 34122 (KR); PARK, Wan Geun, Daejeon 34122 (KR); SHIN, Dong Il, Daejeon 34122 (KR); LEE, Myeong Kyu, Seoul 03722 (KR); KANG, Dong Kyun, Seoul 03722 (KR); PYO, Jeong Woo, Seoul 03722 (KR)
(74) Representative: Goddar, Heinz J.
(86) International application number: PCT/KR2024/096574
(87) International publication number: WO 2025/105936

(57) **Abstract**

A simulation device according to one embodiment disclosed herein may include an interface configured to acquire at least one welding condition information for welding a lead and a tab of a battery, at least one lead condition information corresponding to the lead, and at least one tab condition information corresponding to the tab, and one or more processors, wherein the processor may diagnose a welding state of the lead and the tab by referring to the welding condition information, the lead condition information, and the tab condition information.

## Description

### Technical Field

### CROSS-REFERENCE TO RELATED APPLICATION

This application claims priority to and the benefit of Korean Patent Applications Nos. 10-2023-0159124 and 10-2024-0162044 filed in the Korean Intellectual Property Office on November 16, 2023 and November 14, 2024, respectively, the entire contents of which are incorporated herein by reference.

### TECHNICAL FIELD

Embodiments disclosed herin relate to a battery pack and a method of diagnosing the same.

Embodiments disclosed herein relate to a battery simulation device and a method of operating the same.

### Background Art

Recently, research and development on secondary batteries has been actively conducted. Here, the secondary battery is a battery capable of charging and discharging and includes all recent lithium ion batteries such as conventional Ni/Cd batteries and Ni/MH batteries. Among the secondary batteries, the lithium-ion batteries have an advantage of having a much higher energy density than the conventional Ni/Cd batteries, the Ni/MH batteries, and the like. In addition, since the small and light-weight lithium ion batteries may be manufactured, the lithium ion batteries are used as a power source for mobile devices, and recently, the lithium ion batteries are attracting attention as a next-generation energy storage medium due to the expansion of the range of use to a power source for electric vehicles.

In addition, the secondary batteries may generally be used as a battery pack including a battery module in which a plurality of battery cells are connected in series and/or in parallel. In addition, the secondary batteries may be used as a battery rack including a plurality of battery modules and a rack frame accommodating the battery modules.

The battery cells, the battery modules, the battery packs, or the battery racks may be used in various devices. For example, the batteries may be used not only in mobile devices such as mobile phones, laptop computers, smart phones, and smart pads, but also in a field such as vehicles (electric vehicles (EV), hybrid electric vehicles (HEV), and plug-in HEVs (PHEV)) driven by electricity or a large power storage device (electric power storage system (ESS)).

The battery can supply power to mobile devices, EVs, etc. through a lead-tab, and a lead and tab of the battery can be bonded through laser welding. In this case, the degree to which the lead and tab of the battery need to be welded can affect the efficiency of a battery production process.

Conventionally, a welding state of the lead and tab of the battery is diagnosed through a tensile strength test, but due to the limitation of a destructive test, there is a problem that it is difficult to quickly diagnose a large number of simulation samples. In addition, since the tensile strength test may diagnose only mechanical strength, there is a problem that electrical influence occurring in the battery depending on a welding state cannot be known.

Accordingly, it is necessary to accurately and quickly diagnose the welding state between the lead and the tab before mass-producing the battery and then derive optimal welding conditions.

### Disclosure

### Technical Problem

Embodiments disclosed herein are directed to providing a simulation device capable of diagnosing a welding state between a lead and tab of a battery based on a non-destructive method, and a method of operating the same.

Embodiments disclosed herein are also directed to providing a simulation device capable of diagnosing various welding states between a lead and tab according to welding conditions, and a method of operating the same.

The objects of embodiments disclosed in the present document are not limited to the above-described objects, and other objects that are not mentioned will be able to be clearly understood by those skilled in the art from the following descriptions.

### Technical Solution

A simulation device according to one embodiment disclosed herein may include an interface configured to acquire at least one welding condition information for welding a lead and a tab of a battery, at least one lead condition information corresponding to the lead, and at least one tab condition information corresponding to the tab, and one or more processors, wherein the processor may diagnose a welding state of the lead and the tab by referring to the welding condition information, the lead condition information, and the tab condition information.

In the simulation device according to one embodiment disclosed herein, the one or more processors may calculate currents flowing through a first point of the lead and a second point of the tab and their potentials with respect to at least one lead-tab combination corresponding to at least one of welding condition information and diagnose the welding state of the lead-tab combination based on the currents and the potentials.

In the simulation device according to one embodiment disclosed herein, the one or more processors may calculate the potential and the current based on a finite element method (FEM).

In the simulation device according to one embodiment disclosed herein, the one or more processors may calculate resistance based on the potential and the current and diagnose the welding state based on the resistance.

In the simulation device according to one embodiment disclosed herein, the one or more processors may diagnose a welding state of a specific lead-tab combination greater than or equal to critical resistance among the resistances of the lead-tab combinations as a poor welding state.

In the simulation device according to one embodiment disclosed herein, the at least one welding condition information may include at least some of an area of a region in which the lead overlaps the tab, the number of welding points, a diameter of the welding point, an arrangement of the welding points, and a height of the welding point.

In the simulation device according to one embodiment disclosed herein, the at least one lead condition information may include at least some of a thickness of the lead, an area of the lead, and a material of the lead, and the at least one tab condition information may include at least some of a thickness of the tab, an area of the tab, and a material of the tab.

In the simulation device according to one embodiment disclosed herein, the one or more processors may determine optimal welding condition information among the pieces of welding condition information corresponding to the lead condition information and the tab condition information based on the result of diagnosing the welding state.

A simulation method according to one embodiment disclosed herein may include acquiring at least one welding condition information for welding a lead and a tab of a battery, at least one lead condition information corresponding to the lead, and at least one tab condition information corresponding to the tab, and diagnosing a welding state of the lead and the tab by referring to the welding condition information, the lead condition information, and the tab condition information.

In the simulation method according to one embodiment disclosed herein, the diagnosing of the welding state may include calculating currents flowing through a first point of the lead and a second point of the tab, and their potentials with respect to at least one lead-tab combination corresponding to at least one of welding condition information and diagnosing the welding state of the lead-tab combination based on the currents and the potentials.

In the simulation method according to one embodiment disclosed herein, the diagnosing of the welding state may include calculating the potential and the current based on a finite element method (FEM).

In the simulation method according to one embodiment disclosed herein, the diagnosing of the welding state may include calculating resistance based on the potential and the current and diagnosing the welding state based on the resistance.

In the simulation method according to one embodiment disclosed herein, the diagnosing of the welding state may include diagnosing a welding state of a specific lead-tab combination greater than or equal to critical resistance among the resistances of the lead-tab combinations as a poor welding state.

In the simulation method according to one embodiment disclosed herein, the simulation method may further include determining optimal welding condition information among the pieces of welding condition information corresponding to the lead condition information and the tab condition information based on the result of diagnosing the welding state.

### Advantageous Effects

According to the embodiments disclosed herein, it is possible to diagnose the welding state between the lead and the tab of the battery based on the non-destructive method.

According to the embodiments disclosed herein, it is possible to accurately diagnose various welding states between the lead and the tab according to the welding conditions.

In addition, various effects that may be directly or indirectly identified through the present document can be provided.

### Description of Drawings

FIG. 1 is a block diagram of a simulation device according to one embodiment.
FIGS. 2A and 2B are schematic views illustrating a state in which a lead and a tab according to one embodiment are welded.
FIGS. 3A to 3H are views for describing a potential and a current that are calculated according to one embodiment.
FIG. 4 is a graph illustrating resistance calculated according to one embodiment.
FIG. 5 is an operation flowchart of the simulation device according to one embodiment.
FIG. 6 illustrates a computing system for executing a method of operating the simulation device according to one embodiment.

### Mode for Invention

Hereinafter, various embodiments of the present disclosure will be described with reference to the accompanying drawings. However, it should be understood that this is not intended to limit the present disclosure to specific embodiments and includes various modifications, equivalents, and/or alternatives of the embodiments of the present disclosure.

It should be understood that various embodiments of the present document and the terms used therein are not intended to limit the technical features described in the present document to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "first," "second," "A," "B," "(a)," or "(b)" may simply be used to distinguish the corresponding component from another and do not limit the corresponding components in another aspect (e.g., importance or order).

In the present document, when a certain (e.g., a first) component is described as being "connected," "coupled," or "joined or "coupled" or "connected" to another (e.g., a second) component with or without the terms "functionally" or "communicatively," this means that the certain component may be connected to another component directly (e.g., by wire), wirelessly, or through a third component.

According to various embodiments, each component (e.g., a module or a program) of the above-described components may include a single object or a plurality of objects, and some of the plurality of objects may be separately disposed in another component. According to various embodiments, one or more components or operations among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

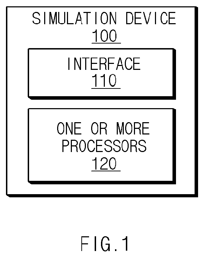

FIG. 1 is a block diagram of a simulation device according to one embodiment.

According to one embodiment, a simulation device 100 may include an interface 110 and one or more processors 120.

According to one embodiment, the interface 110 may acquire at least one welding condition information for welding a lead and a tab of a battery. For reference, the lead and the tab may be bonded through laser welding.

According to one embodiment, the interface 110 may acquire welding condition information, lead condition information, and tab condition information.

In this case, the welding condition information may include at least some of an area of a region in which the lead overlaps the tab, the number of welding points, a diameter of the welding point, the arrangement of the welding points, and a height of the welding point.

In addition, the lead condition information may include at least some of a thickness of the lead, an area of the lead, and a material of the lead, and the tab condition information may include at least some of a thickness of the tab, an area of the tab, and a material of the tab.

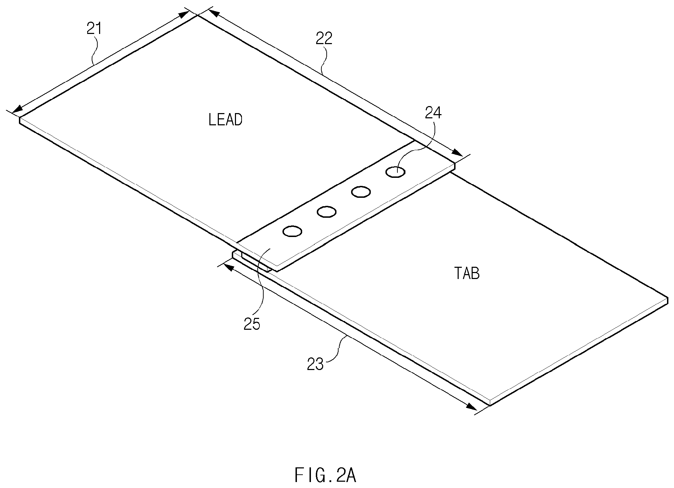

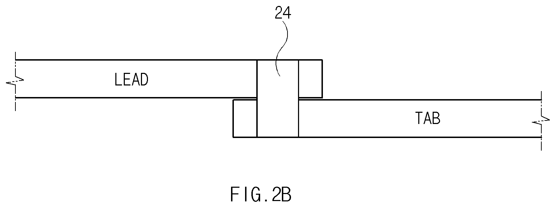

The welding condition information, the lead condition information, and the tab condition information will be described in detail with reference to FIGS. 2A and 2B.

FIGS. 2A and 2B are schematic views illustrating a state in which a lead and a tab according to one embodiment are welded.

First, referring to FIG. 2A, which is a perspective view of the lead and the tab, it can be confirmed that the lead and the tab are bonded through four welding points 24 in an overlapping region 25 in which an upper end of a portion of the tab overlaps a lower end of a portion of the lead.

For reference, for the sake of convenience of description, FIG. 2A illustrates the four welding points 24 arranged in a single row, but the present embodiment is not limited thereto. For example, 1_1 welding condition information may have the number of welding points 24 being 1, 1_2 welding condition information may have the number of welding points 24 being 2, 1_3 welding condition information may have the number of welding points 24 being 4, 1_4 welding condition information may have the number of welding points 24 being 8, 1_5 welding condition information may have the number of welding points 24 being 16, 1_6 welding condition information may have the number of welding points 24 being 32, and 1_7 welding condition information may have the number of welding points 24 being 54.

In addition, referring to FIG. 2B, which is a side view of the lead and the tab, a diameter and height of the welding point 24 that bonds the lead and the tab may be identified. The diameter of the welding point 24 may vary depending on a size of a laser welding beam, and the height of the welding point 24 may vary depending on the thickness of the lead and the number (number) of the tab. For example, 2_1 welding condition information may have the diameter of the welding point 24 being 0.5 mm, 2_2 welding condition information may have the diameter of the welding point 24 being 0.7 mm, 2_3 welding condition information may have the diameter of the welding point 24 being 0.9 mm, and 2_4 welding condition information may have the diameter of the welding point 24 being 1.1 mm. As another example, 3_1 welding condition information may have the height of the welding point 24 being 0.1 mm, 3_2 welding condition information may have the height of the welding point 24 being 0.2 mm, and 3_3 welding condition information may have the height of the welding point 24 being 0.3 mm. As still another example, 4_1 welding condition information may have the arrangement of the welding point 24 being a single-row arrangement, and 4_2 welding condition information may have the arrangement of the welding point 24 being a double-row arrangement.

In this case, in the case of the 1_1 welding condition information to the 1_7 welding condition information, the diameter of the welding point 24, the arrangement of the welding point 24, and the height of the welding point 24 may be the same, but are not limited thereto. In addition, in the case of the 2_1 welding condition information to the 2_4 welding condition information, the number of welding points 24, the arrangement of the welding point 24, and the height of the welding point 24 may be the same, but are not limited thereto. In addition, in the case of the 3_1 welding condition information to the 3_3 welding condition information, the number of welding points 24, the arrangement of the welding point 24, and the diameter of the welding point 24 may be the same, but are not limited thereto. In addition, in the case of the 4_1 welding condition information to the 4_2 welding condition information, the number of welding points 24, the diameter of the welding point 24, and the height of the welding point 24 may be the same, but are not limited thereto.

In addition, the lead condition information may include at least some of a thickness of the lead, a width 21 of the lead, a depth 22 of the lead, and a material of the lead. For example, the lead condition information may include conditions that the thickness of the lead is 0.4 mm, the width 21 of the lead is 42 mm, the depth 22 of the lead is 49 mm, and the material of the lead is aluminum (or copper).

In addition, the tab condition information may include at least some of the thickness of the tab, the width of the tab, a depth 23 of the tab, and a material of the tab. For example, the tab condition information may include conditions that the thickness of the tab is 0.4 mm, the width of the tab is 42 mm, which is the same as the width 21 of the lead, the depth 23 of the tab is 46 mm, and the material of the tab is aluminum (or copper), which is the same as the material of the lead.

For reference, the specific numbers of the lead condition information and the tab condition information are only examples to help understanding, and are not limited thereto. For example, the thickness, width, depth, and material of each of the lead and the tab may be determined according to the design of the battery cell.

In addition, one or more processors 120 may diagnose the welding state of the lead and the tab by referring to the welding condition information, the lead condition information, and the tab condition information.

The aforementioned processor may be implemented as one processor or separate processors. Here, the processor may control one or more other components (e.g., a hardware or software component) of the simulation device 100 by executing software and perform various data processing or calculations.

According to one embodiment, the one or more processors 120 may diagnose the welding state by referring to a plurality of welding condition information with respect to a plurality of lead-tab combinations having the same lead condition information and tab condition information.

For example, for each of first lead-tab combination to seventh lead-tab combination that satisfy the same lead condition information and the same tab condition information, in a state in which each of the aforementioned 1_1 welding condition information (e.g., the number of welding points is 1) to 1-7 welding condition information (e.g., the number of welding points is 7) is applied, the one or more processors 120 may diagnose the welding states of the first lead-tab combination to the seventh lead-tab combination.

According to one embodiment, the one or more processors 120 may calculate currents flowing through a first point of the lead and a second point of the tab, and their potentials with respect to at least one lead-tab combination corresponding to at least one of welding condition information and diagnose the welding state of the lead-tab combination based on the potentials and the currents.

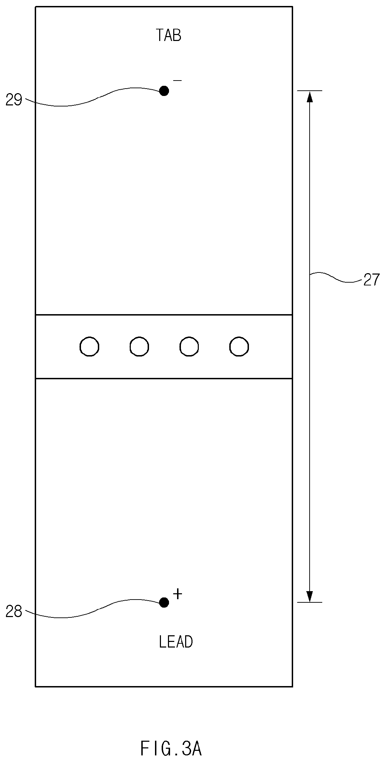

FIGS. 3A to 3H are views for describing a current flowing in a lead-tab combination and its potential.

First, referring to FIG. 3A, a plan view of the lead-tap combination bonded through laser welding is illustrated. In this case, a (+) polarity terminal of a current source (not illustrated) may be electrically connected to a first point 28 of the lead, and a (-) polarity terminal of the current source may be electrically connected to a second point 29 of the tab.

For example, a current source may be electrically connected to the first point 28 and the second point 29 of the lead-tab combination in which the thickness of each of the lead and the tab is 0.4 mm, the width of each of the lead and the tab is 42 mm, the depth of the lead is 49 mm, the depth of the tab is 46 mm, and the material of each of the lead and the tab is aluminum so that a current flows in the lead-tab combination. In this case, a distance 27 between the first point 28 and the second point 29 may be 7 cm. For reference, the distance 27 between the first point 28 and the second point 29 is only an example to help understanding, and is not limited thereto. For example, depending on the size, etc. of each of the lead and the tab, the distance between the first point 28 and the second point 29 may be equal to or different from 7 cm.

According to one embodiment, the one or more processors 120 may calculate the potential and current of the lead-tab combination based on a finite element method (FEM).

According to one embodiment, the one or more processors 120 may calculate resistance based on the potential and the current and diagnose the welding state based on the resistance.

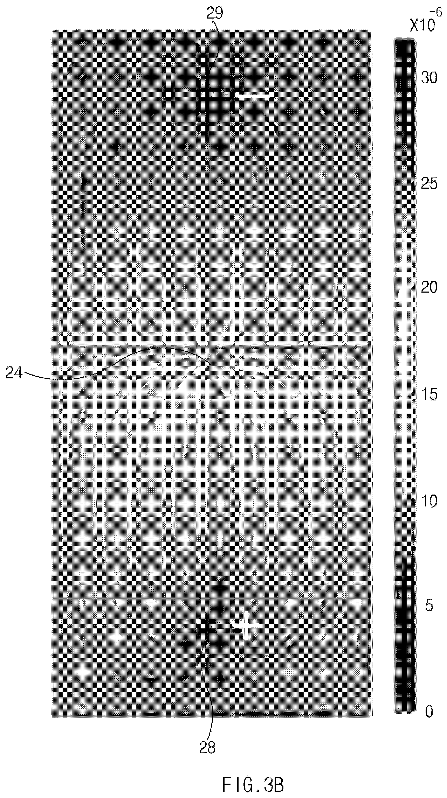

FIGS. 3B to 3D schematically illustrate potentials and currents calculated based on the FEM when a current flows through the first point 28 and the second point 29 in a center contact manner by changing the number of welding points 24 with respect to three lead-tab combinations having the same lead condition information (e.g., condition information that the thickness of the lead is 0.4 mm, the width of the lead is 42 mm, the depth of the lead is 49 mm, and the material of the lead is aluminum) and the same tab condition information (e.g., condition information that the thickness of the tab is 0.4 mm, the width of the tab is 42 mm, the depth of the tab is 46 mm, and the material of the tab is aluminum). For reference, since curves connected from the first point 28 to the second point 29 represent a flow of a current, and contrast and/or color represent resistance due to a potential difference, it can be seen that a potential of the first point 28 is relatively higher than a potential of the second point 29.

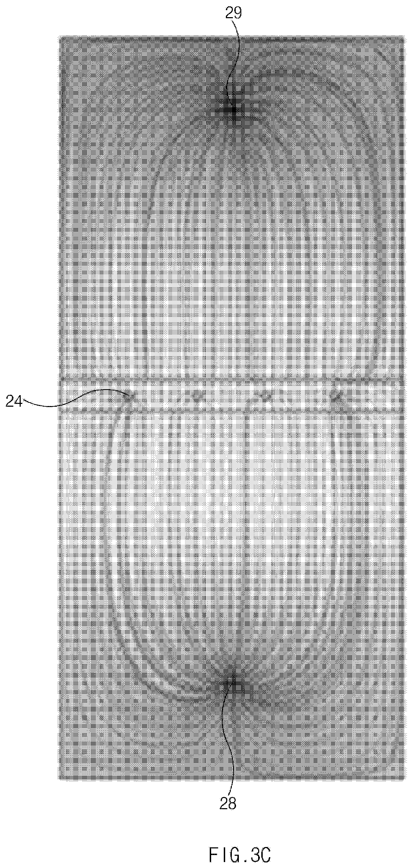

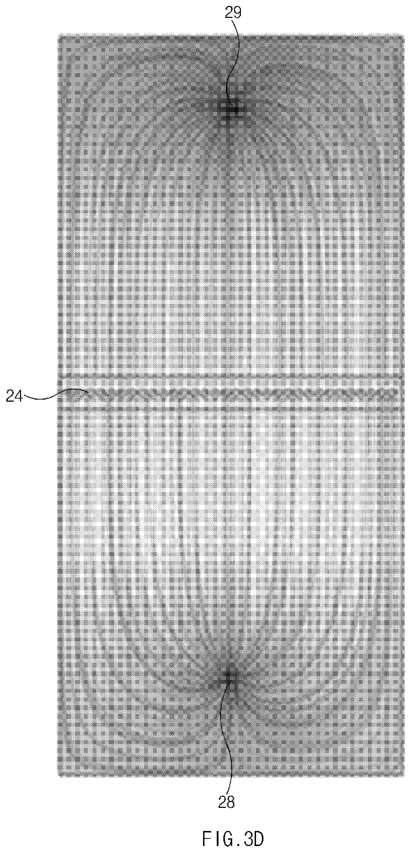

First, referring to FIG. 3B, since the number of welding points 24 is 1, a current moving distance from the first point 28 to the second point 29 is longer than those of the cases of FIGS. 3C and 3D described below and the sum of cross-sectional areas of the welding points 24 is smaller than those of the cases of FIGS. 3C and 3D, it can be seen that the resistance of the welding point 24 is the greatest.

In addition, referring to FIG. 3C, since the number of welding points 24 is 4, a current moving distance from the first point 28 to the second point 29 is shorter than that of the case of FIG. 3B and the sum of cross-sectional areas of the welding points 24 is greater than that of the case of FIG. 3C, it can be seen that the resistance of the welding point 24 is smaller than the case of FIG. 3B.

In addition, referring to FIG. 3D, since the number of welding points 24 is 32, a current moving distance from the first point 28 to the second point 29 is the shortest, and the sum of cross-sectional areas of the welding points 24 is the greatest, it can be seen that the resistance of the welding point 24 is the smallest.

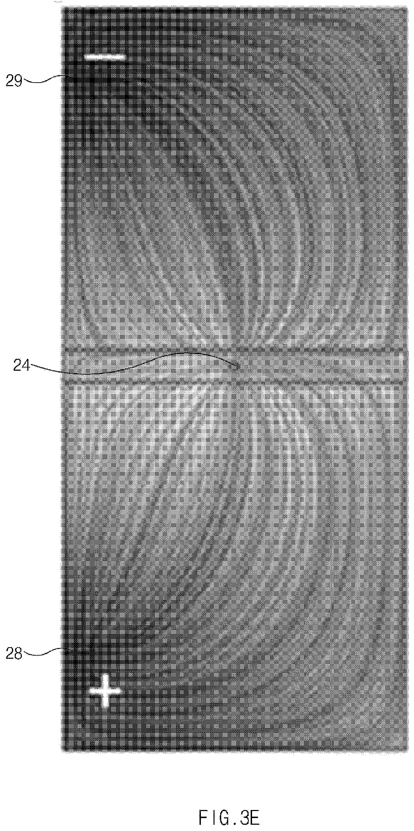

FIGS. 3E to 3F schematically illustrate potentials and currents calculated based on the FEM when a current flows through the first point 28 and the second point 28 in an edge contact manner by changing the number of welding points 24 with respect to two lead-tab combinations having the same lead condition information and the same tab condition information.

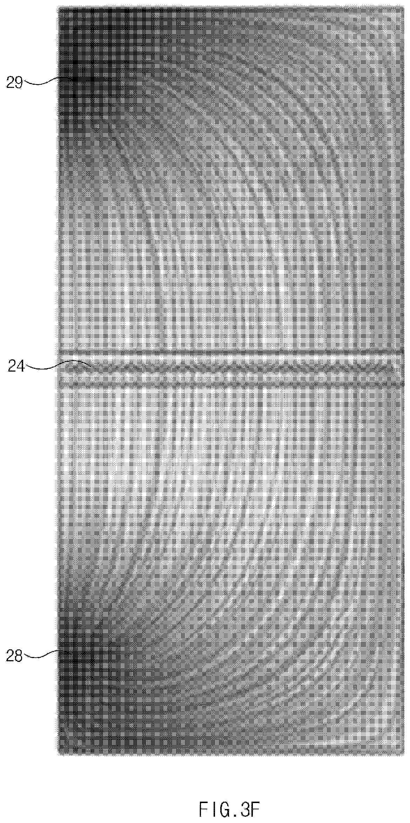

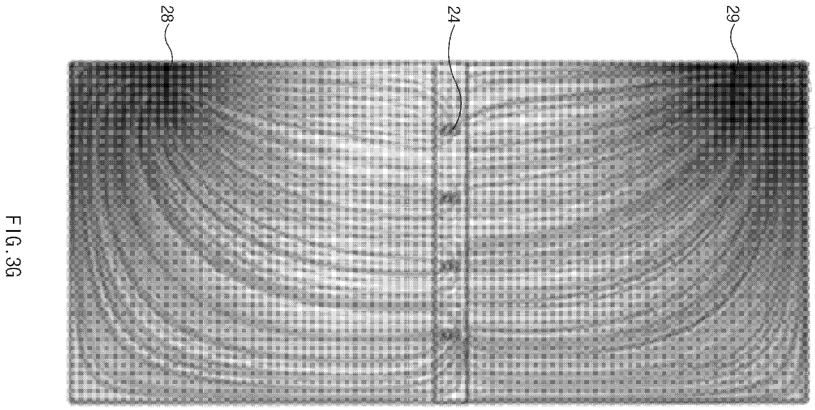

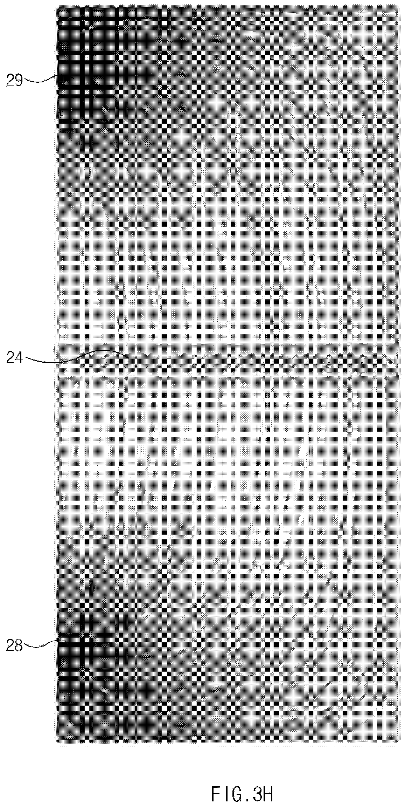

For reference, in the case of FIGS. 3E and 3F and FIGS. 3G and 3H described below, overlapping content (e.g., the lead condition information and the tab condition information) of those of FIGS. 3B to 3D will be omitted, and a difference will be mainly described.

First, referring to FIG. 3E, since the number of welding points 24 is 1, a current moving distance from the first point 28 to the second point 29 is longer than that of the case of FIG. 3F and the sum of cross-sectional areas of the welding points 24 is smaller than that of the case of FIG. 3F, it can be seen that the resistance of the welding point 24 is greater than the case of FIG. 3F.

In addition, referring to FIG. 3F, since the number of welding points 24 is 32, a current moving distance from the first point 28 to the second point 29 is shorter than that of the case of FIG. 3E and the sum of cross-sectional areas of the welding points 24 is greater than that of the case of FIG. 3E, it can be seen that the resistance of the welding point 24 is smaller than the case of FIG. 3E.

FIGS. 3G and 3H schematically illustrate potentials and currents calculated based on the FEM when a current flows through the first point 28 and the second point 28 in an edge contact manner by changing the number of welding points 24 with respect to two lead-tab combinations having the same lead condition information and the same tab condition information. For reference, it can be seen that the arrangement of the welding points 24 in FIGS. 3E and 3F is a single-row arrangement, while the arrangement of the welding points 24 in FIGS. 3G and 3H is a double-row arrangement.

First, referring to FIG. 3G, since the arrangement of four welding points 24 is a double-row arrangement (i.e., the number of welding points 24 is 8), a current moving distance from the first point 28 to the second point 29 is longer than that of the case of FIG. 3H and the sum of cross-sectional areas of the welding points 24 is smaller than that of the case of FIG. 3H, it can be seen that the resistance of the welding point 24 is greater than the case of FIG. 3H.

In addition, referring to FIG. 3H, since the arrangement of four welding points 24 is a double-row arrangement (i.e., the number of welding points 24 is 54), a current moving distance from the first point 28 to the second point 29 is shorter than that of the case of FIG. 3G and the sum of cross-sectional areas of the welding points 24 is greater than that of the case of FIG. 3G, it can be seen that the resistance of the welding point 24 is smaller than the case of FIG. 3G.

For reference, conventionally, a resistance value is calculated by substituting a value of a current supplied from a current source and a potential difference between a first point and a second point of a lead-tab combination into Ohm's law. However, in the case of the conventional method, even when the welding condition information between the first lead-tab combination and the second lead-tab combination is very different (e.g., the number of welding points of the first lead-tab combination is 1 and the number of welding points of the second lead-tab combination is 32), there is a problem that it is difficult to accurately diagnose the welding state because a difference between a resistance value corresponding to the first lead-tab combination and a resistance value corresponding to the second lead-tab combination is not great.

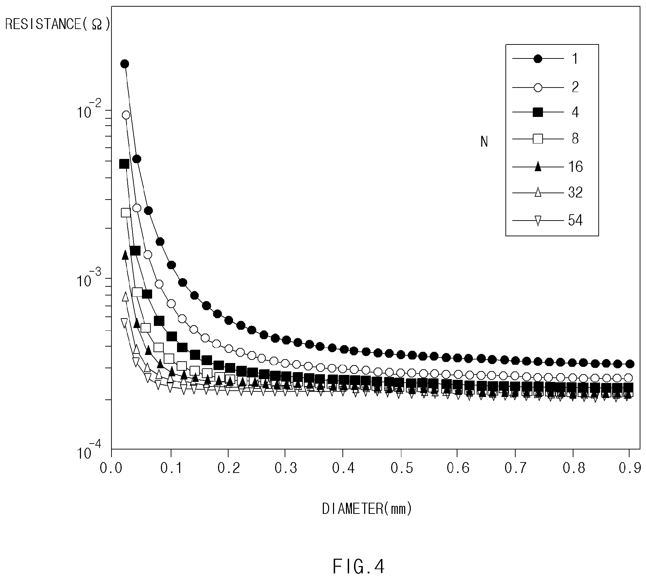

On the other hand, according to one embodiment disclosed herein, since the resistance value calculated based on the FEM sensitively reflects the welding condition information, the welding state of the lead-tab combination can be accurately diagnosed. This will be described in more detail with reference to FIG. 4.

FIG. 4 is a graph illustrating resistance calculated for each diameter of the welding point according to one embodiment disclosed herein.

Referring to FIG. 4, even when the diameter of the welding point is the same, it can be seen that the resistance value changes significantly depending on the number of welding points N. For example, for 7 lead-tab combinations, even when the lead condition information, the tab condition information, and the diameter of the welding point are the same, it can be seen that the resistance value increases significantly as the number of welding points N decreases. In particular, among the 7 lead-tab combinations in which the diameter of the welding point is less than 0.1 mm, it can be seen that a resistance value order of the lead-tab combination having the number of welding points N being 1, 2, 4, 8, or 16 is 1 order or 2 orders higher than a resistance value order of the lead-tab combination having the number of welding points N being 32 or 54.

Accordingly, another simulation device 100 disclosed in one embodiment disclosed herein may diagnose the welding state of the lead-tab combination based on the aforementioned characteristics.

According to one embodiment, the one or more processors 120 may diagnose a welding state of a specific lead-tap combination having a resistance greater than or equal to critical resistance among resistances of the lead-tab combinations as a poor welding state.

For example, the one or more processors 120 may diagnose a welding state of a specific lead-tab combination having a resistance value greater than or equal to a critical resistance value among a plurality of lead-tab combinations as a poor welding state. In this case, the critical resistance value may have a fixed value, but is not limited thereto. For example, the critical resistance value may be a value set based on at least some of the lead condition information, the tab condition information, and the welding condition information.

As another example, the one or more processors 120 may diagnose a welding state of a specific lead-tab combination included in a lower ratio (e.g., a lower 30% of the population) among the resistances of the plurality of lead-tab combinations as a poor welding state.

According to one embodiment, the one or more processors 120 may determine optimal welding condition information among the pieces of welding condition information corresponding to the lead condition information and the tab condition information based on the result of diagnosing the welding state. For example, the one or more processors 120 may determine a first lead-tab combination to an n^{th} lead-tab combination that are in a normal welding state based on the result of diagnosing the welding state and determine specific welding condition information applied to a specific lead-tab combination having the smallest resistance value among the first lead-tab combination to the n^{th} lead-tab combination that satisfy specific lead condition information and specific tab condition information as optimal welding condition information.

In this way, before mass-producing a battery, by applying a plurality of pieces of welding condition information to a plurality of lead-tab combinations that satisfy the specific lead condition information and the specific tab condition information to be applied to the battery, calculating the resistance value based on the FEM, and based on this, determining optimal welding condition information, it is possible to quickly efficiently perform simulation.

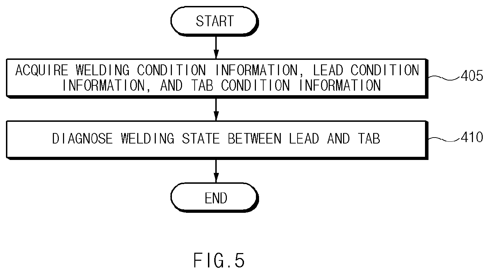

FIG. 5 is an operation flowchart of the simulation device 100 according to one embodiment. FIG. 5 may be a description of the operation of the simulation device 100 of FIG. 1 and may be described using the configuration of FIG. 1.

The embodiment illustrated in FIG. 5 is only one embodiment, the order of operations according to various embodiments of the present invention may differ from that illustrated in FIG. 5, and some operations illustrated in FIG. 5 may be omitted, the order between the operations may be changed, or the operations may be merged.

Referring to FIG. 5, in operation 405, the simulation device 100 may acquire at least one welding condition information for welding the lead and the tab of the battery, at least one lead condition information corresponding to the lead, and at least one tab condition information corresponding to the tab.

In operation 410, the simulation device 100 may diagnose the welding state of the lead and the tab by referring to the welding condition information, the lead condition information, and the tab condition information. According to one embodiment, the simulation device 100 may calculate currents flowing through a first point of the lead and a second point of the tab, and their potentials with respect to at least one lead-tab combination corresponding to at least one of welding condition information and diagnose the welding state of the lead-tab combination based on the currents and the potentials. According to one embodiment, the simulation device 100 may calculate a potential and a current based on the FEM. According to one embodiment, the simulation device 100 may calculate resistance based on the potential and the current and diagnose the welding state based on the resistance. According to one embodiment, the simulation device 100 may diagnose the welding state of the specific lead-tab combination having the resistance greater than or equal to the critical resistance among the resistances of the lead-tab combinations as a poor welding state. According to one embodiment, the simulation device 100 may determine optimal welding condition information among the welding condition information corresponding to the lead condition information and the tab condition information based on the result of diagnosing the welding state.

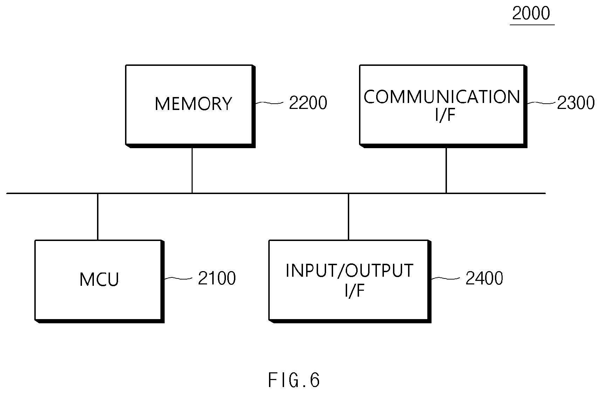

FIG. 6 illustrates a computing system for executing a method of operating the simulation device 100 according to one embodiment disclosed herein.

Referring to FIG. 6, a computing system 2000 according to one embodiment disclosed herein may include a micro controller unit (MCU) 2100, a memory 2200, an input/output I/F 2300, and a communication I/F 2400.

The MCU 2100 may be a processor for executing various programs (e.g., a welding state diagnosis program) stored in the memory 2200 and performing functions of the simulation device 100 described with reference to FIGS. 1 to 4 or a processor for executing the method of operating the simulation device 100 described with reference to FIG. 5.

The memory 2200 may store various programs, etc. for diagnosing the welding state. In addition, the memory 2200 may store various data such as a resistance value as the result of diagnosing the welding state of each of the lead-tab combinations.

A plurality of memories 2200 may be provided as needed. The memory 2200 may be a volatile memory or a non-volatile memory. As the memory 2200 of the volatile memory, a RAM, a DRAM, a SRAM, or the like may be used. As the memory 22100 of the non-volatile memory, a ROM, a PROM, an EAROM, an EPROM, an EEPROM, a flash memory, etc. can be used. The examples of the above-listed memories 2200 are merely exemplary and are not limited to these examples.

The input/output I/F 2400 may be an interface for connecting an input device (not shown), such as a keyboard, a mouse, or a touch panel, and an output device, such as a display (not shown) with the MCU 2100 and allowing the input and output devices and the MCU 2100 to transmit and receive data.

The communication I/F 2300 is a component capable of transmitting and receiving various data to and from the server and may be various devices capable of supporting wired or wireless communication. For example, programs, various data, or the like for determining whether the welding state is abnormal may be transmitted and received from a separately provided external server through the communication I/F 2300.

In this way, the method of operating the simulation device 100 according to one embodiment disclosed herein may be stored in the memory 2200 and executed by the MCU 2100.

The terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

## Claims

1. A simulation device comprising:
an interface configured to acquire at least one welding condition information for welding a lead and a tab of a battery, at least one lead condition information corresponding to the lead, and at least one tab condition information corresponding to the tab; and
one or more processors,
wherein the processor diagnoses a welding state of the lead and the tab by referring to the welding condition information, the lead condition information, and the tab condition information.

2. The simulation device of claim 1, wherein the one or more processors calculate currents flowing through a first point of the lead and a second point of the tab, and their potentials with respect to at least one lead-tab combination corresponding to at least one of welding condition information and diagnose the welding state of the lead-tab combination based on the currents and the potentials.

3. The simulation device of claim 2, wherein the one or more processors calculate the potential and the current based on a finite element method (FEM).

4. The simulation device of claim 3, wherein the one or more processors calculate resistance based on the potential and the current and diagnose the welding state based on the resistance.

5. The simulation device of claim 4, wherein the one or more processors diagnose a welding state of a specific lead-tab combination greater than or equal to critical resistance among the resistances of the lead-tab combinations as a poor welding state.

6. The simulation device of claim 1, wherein the at least one welding condition information includes at least some of an area of a region in which the lead overlaps the tab, the number of welding points, a diameter of the welding point, an arrangement of the welding points, and a height of the welding point.

7. The simulation device of claim 1, wherein the at least one lead condition information includes at least some of a thickness of the lead, an area of the lead, and a material of the lead, and
the at least one tab condition information includes at least some of a thickness of the tab, an area of the tab, and a material of the tab.

8. The simulation device of claim 1, wherein the one or more processors determine optimal welding condition information among the pieces of welding condition information corresponding to the lead condition information and the tab condition information based on the result of diagnosing the welding state.

9. A simulation method comprising:
acquiring at least one welding condition information for welding a lead and a tab of a battery, at least one lead condition information corresponding to the lead, and at least one tab condition information corresponding to the tab; and
diagnosing a welding state of the lead and the tab by referring to the welding condition information, the lead condition information, and the tab condition information.

10. The simulation method of claim 9, wherein the diagnosing of the welding state includes calculating currents flowing through a first point of the lead and a second point of the tab, and their potentials with respect to at least one lead-tab combination corresponding to at least one of welding condition information and diagnosing the welding state of the lead-tab combination based on the currents and the potentials.

11. The simulation method of claim 10, wherein the diagnosing of the welding state includes calculating the potential and the current based on a finite element method (FEM).

12. The simulation method of claim 11, wherein the diagnosing of the welding state includes calculating resistance based on the potential and the current and diagnosing the welding state based on the resistance.

13. The simulation method of claim 12, wherein the diagnosing of the welding state includes diagnosing a welding state of a specific lead-tab combination greater than or equal to critical resistance among the resistances of the lead-tab combinations as a poor welding state.

14. The simulation method of claim 9, further comprising determining optimal welding condition information among the pieces of welding condition information corresponding to the lead condition information and the tab condition information based on the result of diagnosing the welding state.
